# EUROPEAN PATENT SPECIFICATION

(11) **EP 2 271 856 B1**
(45) Date of publication and mention of the grant of the patent: **08.05.2013**
(21) Application number: 09724199.6
(22) Date of filing: 25.03.2009
(51) Int. Cl.: F16F 15/32, F16F 15/34

(54) **WHEEL BALANCE CLIP**
HALTER FÜR AUSWUCHTGEWICHT
ATTACHE DE DE FIXATION DE MASSE D'ÉQUILIBRAGE DE ROUE

(30) Priority: 26.03.2008 GB 0805441
(43) Date of publication of application: 12.01.2011
(73) Proprietor: Trax Jh Ltd., Newtown, Powys SY16 4LE (GB)
(72) Inventor: WATKIN Richard Adam, Powys SY16 4LE (GB); HALLE John William Charles, Powys SY16 4LE (GB)
(74) Representative: Gosnall, Toby
(86) International application number: PCT/GB2009/000778
(87) International publication number: WO 2009/118518

(56) References cited:
- DE-A1-102006 039 485
- DE-B- 1 083 679
- DE-B- 1 087 030
- FR-E- 83 163
- JP-A- 11 063 111
- JP-A- 2001 248 691

## Description

### Field of the Invention

The present invention relates to a wheel balance clip. In particular, but not exclusively, the invention relates to a wheel balance clip arranged to be fitted to a steel wheel rim.

### Background of the Invention

Where a tyre fitted to a wheel (or indeed the wheel itself) is heavier at one side than the other an out-of-balance vibration can manifest during driving, which can cause noticeable vibration on the steering wheel, and through the car itself. This causes tyres and mechanical parts to wear more quickly and ultimately could render a vehicle unsafe. Wheel balance weights are used to correct out-of-balance defects on tyred wheels, and are arranged to attach to the rims of wheel used by vehicles such as cars, buses, trucks or the like.

Where a tyre or wheel rim is observed to be out-of-balance, a wheel balance weight of compensatory measure may be attached to the rim of the wheel diametrically opposite the heavier portion of the tyre/wheel.

For some types of wheels, previous wheel balance weights have either been provided as complete assemblies, whereby a weight portion is cast around a clip to provide a consolidated assembly, or as a separate clip and weight portions, which arranged to be mechanically attached to one-another.

Such wheel balance weights are attached by means of an integral U-shaped spring that is arranged to open and close elastically upon the rim of the wheel to retain the clip in position. During their lifetime however as a vehicle accelerates and decelerates the wheel balance weights will experience forces acting either to encourage removal of the weights from the rim, and/or to encourage them to displace circumferentially around the rim. In each case this can lead to the failure of the wheel balance weight.

It is presently common for vehicle wheels be one of two different types of wheel: so-called alloy wheels, or wheels fabricated from steel (i.e. steel wheels). Due to the fabrication techniques involved for each of these two types of wheel, the rims of each have different properties.

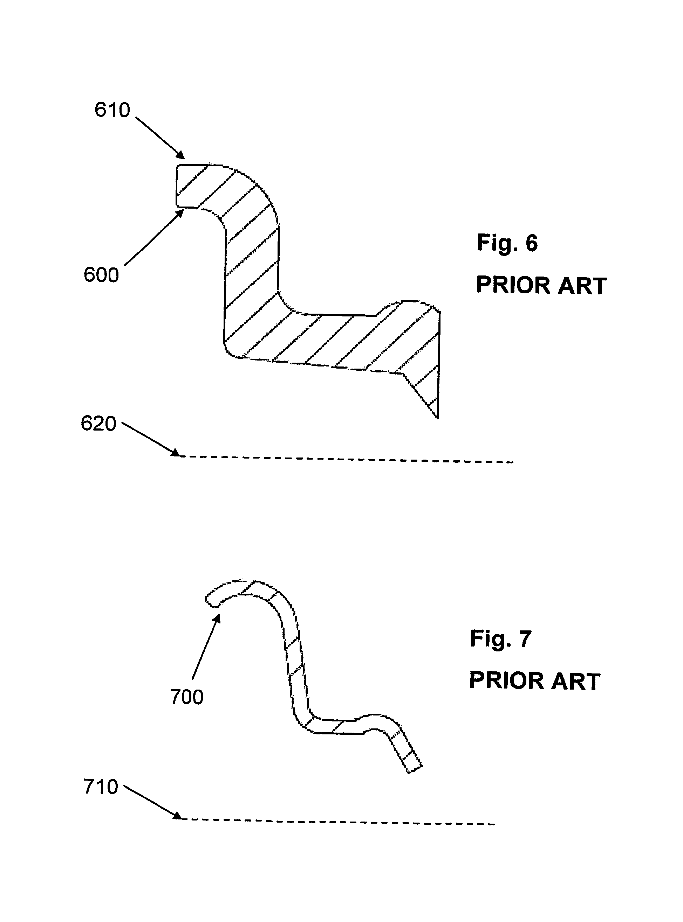

Alloy wheel rims are cast and as such have draft angles so that they can be removed from the mould. Thus, the edges regions of an alloy wheel rim are either parallel to an axis of the wheel, or are divergent, in a direction away from the wheel, from an axis of the wheel. Figure 6 shows a typical cross-section through part of a cast alloy wheel rim, the cast alloy wheel rim having edge regions 600,610 parallel to an axis 620 of the wheel. An example of such an alloy wheel rim is shown in JP10331918. In contrast the rims of steel wheels are rolled over in order to present a smooth surface to a tyre so that the tyre is not damaged during fitting onto the wheel. Figure 7 shows a typical cross-section through part of a rolled steel wheel rim, the rolled steel wheel rim having an edge region 700 that is not parallel to nor divergent away from an axis 710 of the wheel and instead is divergent towards or rolled over towards the axis 710.

It is conceivable that a wheel rim could be manufactured, from a so-called alloy material, but using fabrication techniques similar to those used for fabricating a so-called steel rim. Rims fabricated in such a manner should also be considered to be so-called steel rims.

JP11294540 discloses a wheel clip on an alloy or cast wheel having a curved section of the clip that extends from the clip so as to interact with the underside of the wheel rim. This clip has a spring portion with shape complementary to a specific wheel rim and is therefore not suitable for secure attachment to a range of wheel rims having varied thicknesses and geometries.

JP11063112 discloses a wheel clip having a deformed section of the clip that interacts with the underside of a cast or alloy wheel rim through a barb that digs into the surface of the wheel rim. Such a clip is not suitable for attachment to a wheel rim without damage being caused to the wheel rim. Further such a clip is not suitable for secure attachment to a range of wheel rims having varied thicknesses and geometries where the orientation of the barb relative to the surface of the wheel rim varies and in consequence the effectiveness of the barb is reduced.

DE 10 2006 039485 that forms the closest prior art according to the preamble of claim 1 shows a balance weight with a weight body 1 and a retaining spring 2 with which the weight body 1 is retained at the rim 3 of a vehicle wheel, particularly a motor vehicle wheel, to attach the weight for unbalance compensation.

### Summary of the Invention

According to a first aspect of the invention there is provided A wheel balance clip comprising a spring portion arranged to accommodate and attach to a rim of a wheel having an edge region divergent from a parallel to an axis of that wheel in a direction towards the axis; and an attachment portion depending from the spring portion, wherein the spring portion comprises at least one rim-edge-region-engaging protrusion, arranged such that, when in use, the at least one rim-edge-region-engaging protrusion engages an underside edge region of a rim such that removal of the clip from that rim causes the spring portion to open and characterised in that: the attachment portion comprises a first face provided with at least one second protrusion which provides a rim-wall-engaging protrusion, which interacts with a rim of a wheel, generally with a face thereof, on which it is fitted. Such an arrangement may be advantageous, as the provision of protrusion aids the retention of the clip by increasing the force required to remove the clip from the rim of the wheel.

An arrangement, whereby the rim-edge-region-engaging protrusion is arranged such that, in use, it interacts with the underside of the divergent edge region of the wheel rim, may be further advantageous as this may allow for the rim-edge-region-engaging protrusion to interact with a wider range of designs of wheel rims having divergent edge regions.

Such an arrangement may be yet further advantageous, as the provision of the at least one rim-edge-region-engaging protrusion that engages an underside edge region of the wheel rim may allow the clip to be attached to a wheel rim without the specific need to create a groove, indentation or recess, or may allow the clip to be attached to a wheel rim having a surface with substantially continuous curvature. As such the clip may be used on a wider range of designs of wheel rims.

The rim-edge-region-engaging protrusion may be arranged to operate on a substantially flat surface of a wheel rim. Prior art solutions are known which require a recess to be provided in a wheel rim in order to increase retention. Requiring such a rim increases not only the cost but also the complexity of fitting a wheel balance weight.

Further, it is convenient if the clip is arranged such that abutment of the spring portion against the wheel rim limits the position of the clip on the rim. Prior art clips have relied upon the location of a recess on the rim which is disadvantageous because location of the recess requires a degree of accuracy which is beyond the manufacturing tolerances of the wheel. Further, placement of the recess on the rim needs to be specified for each design of wheel which is problematic and increases costs alternatively, a clip will need to be specified for a design of wheel thereby making the solution more unique and expensive and not universal in nature.

It may be advantageous for the rim-edge-region-engaging protrusion to be arranged such that, in use, it interacts with the underside of the rim of a wheel when in use.

The rim-edge-region-engaging protrusion may be formed by deforming a region of the spring portion. Such an arrangement may be advantageous, as this may allow for easier manufacture, for example by stamping or the like. Alternatively the rim-edge-region-engaging protrusion may be formed from an appendage attached to the spring portion.

The spring portion may be provided with a plurality of rim-edge-region-engaging protrusions.

The protrusion on the spring portion may be substantially arcuate in shape or may have a substantially curved or arcuate surface. Such an arrangement may be advantageous, as this may allow easier fitting of the clip to the rim of a wheel. Further such an arrangement may be advantageous, as this may allow the fitting of the clip to the rim of a wheel without the protrusion damaging the surface of the rim.

In addition, the attachment portion may comprise a first face provided with at least one rim-wall-engaging protrusion, which interacts with the rim of the wheel on which it is fitted so as to aid retention of the clip. Such an arrangement may be advantageous, as the provision of the at least one rim-wall-engaging protrusion may increase the stress in the spring portion when compared to a clip without a rim-wall-engaging protrusion thereby causing the spring to grip the rim with more force. In effect, the rim-wall-engaging protrusion acts to aid retention of the clip in addition to the rim-edge-region-engaging protrusion on the spring portion. It may be advantageous for the rim-wall-engaging protrusion to interact with a face, such as the vertical face, of the rim of a wheel when in use.

The rim-wall-engaging protrusion may be formed from a deformed region of the attachment portion. Such an arrangement may be advantageous, as this may allow for easier manufacture, for example by stamping. Alternatively the rim-wall-engaging protrusion may be formed from an appendage attached to the attachment portion.

The attachment portion may be provided with a plurality of rim-wall-engaging protrusions. Such an arrangement may be advantageous as this may provide for localised areas of increased pressure and/or ensure that the clip is evenly stressed across its width.

The or each rim-wall-engaging protrusion may be arranged to extend substantially perpendicularly from the first face of the attachment portion of the clip. The or each rim-wall-engaging protrusion may be formed substantially as an oblong pyramid. Such arrangements may be advantageous as they may provide for localised areas of increased pressure and/or may increase the range range of designs of wheel rim to which the clip may be fitted wherein sufficient retentive tension is generated in the clip.

The rim-wall-engaging protrusion on the clip may be provided with an upper region. The upper region may be substantially cambered. Such an arrangement may be advantageous, as this may allow easier fitting of the clip to the rim of a wheel. The rim-wall-engaging protrusion may have a substantially curved or arcuate surface. Such an arrangement may be advantageous, as this may allow easier fitting of the clip to the rim of a wheel. Further such an arrangement may be advantageous, as this may allow the fitting of the clip to the rim of a wheel without the rim-wall-engaging protrusion damaging the surface of the rim.

The attachment portion may comprise a second face, generally on an opposite side of the clip from the first face, which may be arranged to mount a balance weight thereupon. The second face may be a substantially flat surface; i.e planar. In some embodiments, the second face may have depressions therein whilst the remainder of the face is substantially flat. A planar surface is advantageous since it easier to ensure good contact with a weight, such good contact helps to ensure that the weight does not fall from the clip.

Alternatively the attachment portion may be arranged to have a balance weight cast thereupon, whereby the protrusion extends beyond the surface of cast balance weight so as to still interact with a rim to which the clip is attached.

The clip may be provided with protection against corrosion, and/or damage. The clip may be painted, electroplated, galvanised, zinc plated and/or dip or powder coated. The colour of the clip may be altered for example so that it conforms to the colour of the wheel to which the clip is to be attached.

According to a second aspect of the invention there is provided a method of maintaining a wheel balance clip upon a steel rim of a wheel, comprising the steps of providing a clip as hereinbefore defined, and attaching the clip to a rim such that the rim-edge-region-engaging protrusion interacts with the underside of the rim upon which the clip is fitted and characterised in that the second, rim-wall-engaging portion interacts with a rim of a wheel on which it is fitted.

According to a third aspect of the invention there is provided a wheel balance clip according to the first aspect of the invention on which a balance weight has been mounted upon the second face of the clip.

Such mounting may be by way of adhesive, such as by adhesive tape. Such an arrangement may be advantageous, as it would allow balance weights of various masses to be mounted on the same clip thereby reducing manufacturing costs since a single clip can be provided for a plurality of different masses.

If an adhesive substance, such as adhesive tape were to be used it may be advantageous if adhesive substance were to be capable of withstanding the temperature of an oven used when powder coating, dip coating or the like. Such an arrangement may be advantageous, as this would allow the wheel balance assembly to be powder-coated or dip-coated after assembly without the adhesive failing.

In other embodiments, the balance weight may be mounted by means other than adhesive. For example, the balance weight may be mounted by means of soldering, brazing, welding, riveting, bolting, or the like.

According to a fourth aspect of the invention there is provided a wheel rim which is fabricated substantially from steel, on which there is affixed one or more wheel balance clips according to the first aspect of the invention.

Steel wheel rims have a thickness in the range of substantially 1mm to 3.5mm. In other embodiments, the thickness of the wheel rim lies substantially in the range 1.5mm to 2.5mm.

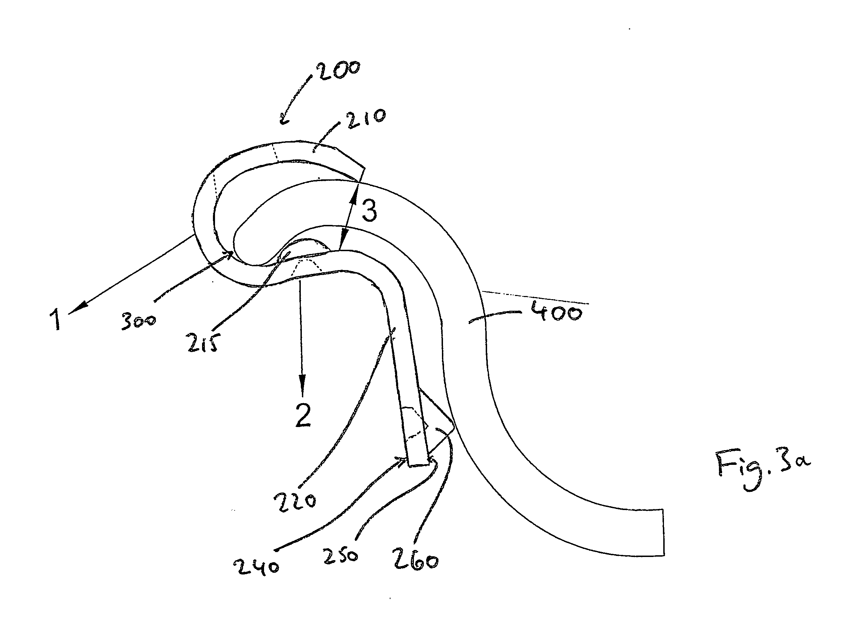

When viewed in cross section with an axis of the wheel lying substantially vertically (as for example shown in Figure 3a), an edge region of the rim of the wheel may be inclined at an angle to the horizontal. Indeed, the edge region of the rim may be curved and this curvature may result in increased forces, produced by the cam, as the clip is pulled from the wheel.

The rim may have a substantially smooth surface; that is, there are no grooves, etc. in the rim. This is commonly how wheel rims are fabricated and it is simpler to arrange for a wheel balance clip to engage such rims rather than having to modify the existing rims.

Further, when wheel balance clips are fitted to a wheel rim, they are hit onto the rim using a tool such as a hammer. It is more convenient, if the clip does not engage with a groove, or the like, since the need for alignment of the clip and groove are eliminated.

The clip will generally abut an edge of the rim when it is in place. Again, such an arrangement is convenient as it allows the clip to be hit until it does not move onto the rim further.

According to a fifth aspect of the invention there is provided a wheel balance clip comprising a spring portion arranged to accommodate and attach to a steel wheel rim and an attachment portion depending from the spring portion, wherein the spring portion comprises at least one rim-edge-region-engaging protrusion, arranged such that, when in use, the at least one rim-edge-region-engaging protrusion engages an edge region of the rim such that removal of the clip from the rim causes the spring portion to open.

Further, an arrangement whereby the rim-edge-region-engaging protrusion is arranged such that, in use, it interacts with the underside of the wheel rim, may be advantageous as this may allow for the rim-edge-region-engaging protrusion to interact with a wider range of designs of wheel rims.

In other embodiments such as a wheel balance assembly comprising a wheel rim and a clip according to any embodiment of the invention, the wheel rim and clip may be so arranged that when viewed in cross section with an axis of the wheel lying substantially vertically, an edge region of the rim of the wheel is inclined at an angle. Further the edge region of the rim may be curved. Further the clip may abut an edge of the rim.

### Brief description of the drawings

There now follows, by way of example only, a detailed description of embodiments of the present invention with reference to the accompanying drawings of which:
**Figure 1** shows a background example to set the invention into context;
**Figure 2** shows an embodiment of the present invention;
**Figure 3** shows an embodiment of the present invention in use on two different wheel rims;
**Figure 4** shows a further view of the embodiment shown in Figure 2 on which a mass has been mounted;
**Figure 5** shows a further embodiment of the present invention;
**Figure 6** shows a background example of a cross-section through part of a cast alloy wheel rim; and
**Figure 7** shows a background example of a cross-section through part of a rolled steel wheel rim.

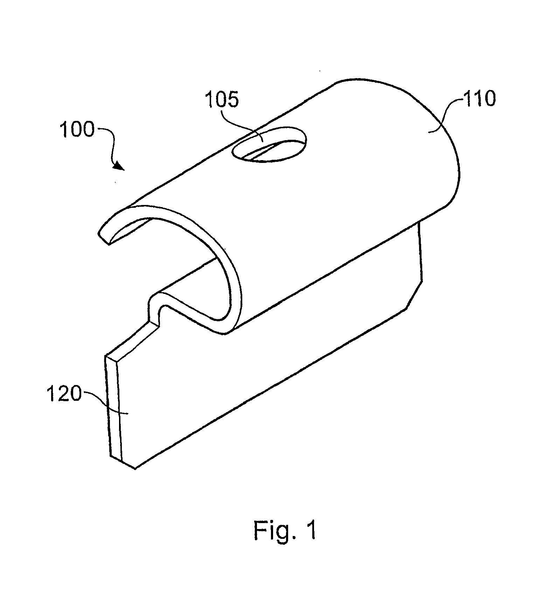

Figure 1 shows a wheel balance clip 100 (hereinafter termed clip). The clip 100 comprises a U shaped spring portion 110 and an attachment portion 120, depending from the spring portion 110. The U-shape of the spring portion 110 is provided to accommodate and attach the clip 100 to a rim of a wheel. The attachment portion 120 is arranged such that a wheel balance weight may be attached thereto, thus providing a consolidated wheel balance weight assembly. Furthermore the spring portion 110 is provided with a cut-out region 105, arranged to accommodate a removal tool.

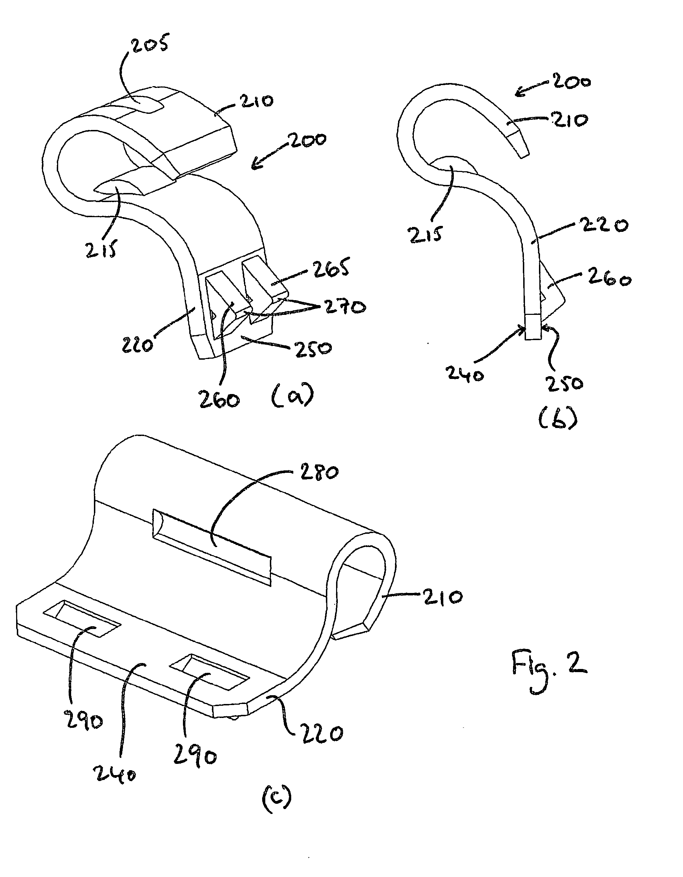

Figure 2 shows a first embodiment of the present invention. Parts of the first embodiment which are similar to the those parts discussed in relation to Figure 1 are referenced with the same reference numeral but with the addition of 100. In the first embodiment a clip 200 comprises a U shaped spring portion 210 and an attachment portion 220, depending from the spring portion 210, wherein the spring portion 210 is provided with a cut-out region 205. The attachment portion 220 further comprises a first face 250 and a second face 240, the second face 240 on an opposite side of the clip from the first face 250.

In the present embodiment the second face 240 is arranged such that a wheel balance weight may be mounted thereupon, for example by adhesion, riveting, welding, etc. In the present embodiment it is intended to adhesively mount the balance weight upon the second face using adhesive tape. The adhesive tape is selected be able to withstand the duration of exposure to temperatures used in a coating oven, such as those used in powder coating, dip coating or the like.

The weight is typically fabricated from any of the following materials: steel, zinc, lead, copper (or any other suitable metal or metal alloy), or glass, ceramic, stone or plastic (or any other suitable non-metallic material).

For cars and similar sized vehicles the wheel balance clip and weight combination will usually be provided so that they have a total weight in the range of roughly 5g to 100g generally in increments of roughly 5g or 10g. For larger vehicles such as lorries or buses the total mass may approach 500g. For smaller masses (such as for example 5g or 10g) the clip may be used with no weight being attached thereto. Some countries may specify the weight of the balance weight in other increments, such as roughly 2.5g. The skilled person will appreciate that other increments are equally possible.

In alternative embodiments the wheel balance weight may be arranged to be mounted upon the first face 250 and the second face 240. In such an arrangement the wheel balance weight may be cast around the attachment portion 220.

The spring portion 210 is provided with a rim-edge-region-engaging protrusion 215. In alternative embodiments the spring portion 210 may be provided with any number of rim-edge-region-engaging protrusions, such as 2, 3, 4, 10, 20, etc. or any number in between these.

The rim-edge-region-engaging protrusion 215 is arranged to extend from the inner surface of the spring portion 210. In this embodiment deforming a region of the spring portion 210 forms the rim-edge-region-engaging protrusion 215, such that the rim-edge-region-engaging protrusion 215 on the inner surface has a complementary recess region 280 in the outer surface of the spring portion 210. Such a deformed region is advantageous as it will allow the clip 200 to be fabricated by stamping which is a convenient and cost effective mass manufacturing technique.

In alternative embodiment the rim-edge-region-engaging protrusion 215 may be provided as an appendage. The appendage may be provided as a constituent component of the inner surface, or as an additional component attached to the inner surface. A person skilled in the art will readily know how to implement such alternative arrangements.

In the present embodiment, the rim-edge-region-engaging protrusion 215 is substantially arcuate in shape.

In the present embodiment the rim-edge-region-engaging protrusion 215 is located in a central region of the inner surface, such that the rim-edge-region-engaging protrusion 215 engages the underside of the rim of the wheel in use. It will be readily appreciated that alternative configurations and locations of rim-edge-region-engaging protrusion 215 may be used, and a person skilled in the art will be able to implement these.

The first face 250 is provided with a two rim-wall-engaging protrusions 260, 265. While in the present embodiment the rim-wall-engaging protrusions 260, 265 are positioned along a common longitudinal axis of the attachment portion 220, in alternative embodiments the rim-wall-engaging protrusions 260, 265 may occupy any number of further regions of the second face 250. In alternative embodiments the attachment portion 220 may be provided with any alternative number of protrusions, such as 1, 3, 4, 10, 20, etc. or any number in between these. In a further embodiment, the attachment portion 220 may be provided without any protrusions.

The rim-wall-engaging protrusions 260, 265 are arranged to extend from the first face 250. In this embodiment deforming a region of the attachment portion 220 forms the rim-wall-engaging protrusions 260, 265 such that the rim-wall-engaging protrusions 260, 265 on the first face 250 has a complementary recess region 290 in the second face 240. In alternative embodiment the two rim-wall-engaging protrusions 260, 265 may be provided as appendages. The appendages may be provided as constituent components of the first face 250, or as additional components attached to the first face 250. A person skilled in the art will readily how to implement such alternative arrangements.

Thus, it will be seen that the second face 240 provides a generally planar surface to which weights may be attached despite the presence of the two recess regions 190. Such a planar region is advantageous as it provides a large surface area to which a weight can be attached. The skilled person will appreciate that a large surface area will increase the force with which the weight is attached to the clip and as such should help to ensure that the weight and the clip are held together better.

In the present embodiment the rim-wall-engaging protrusions 260, 265 are formed as a generally pyramidal shape. The rim-wall-engaging protrusions 260, 265 are also provided with a cambered upper surface region 270. In alternative embodiments the rim-wall-engaging protrusions 260, 265 may be provided with a tapered upper surface region 270, or an alternative configuration.

In the present embodiment the rim-wall-engaging protrusions 260, 265 are located in a central region of the first face 250, although it will be readily appreciated that alternative configurations and locations of rim-wall-engaging protrusions 260, 265 may be used, and a person skilled in the art will be able to implement these. In addition, the rim-wall-engaging protrusion 260 may extend for substantially the entire length and/or height of the face 250.

Figure 3a shows one example of how the wheel balance clip 200 of the first embodiment may be used. The Figure shows a steel wheel rim in which the edge region of the wheel rim has been rolled to provide a smooth surface to accommodate the fitment of a tyre. Thus, it will be seen that an edge region of the rim is curved in nature which arises from the rolling process.

In this Figure the weight, which may be mounted on the attachment portion 220, is not shown. Some embodiments may not have a weight mounted thereon as the mass of the clip 200 may be all that is required. (for example 2.5g, 5g or 10g masses may be provided by just the clip without requiring a mass to be attached to the clip).

In use, the U-shaped spring portion 210 is opened, and then closed upon a rim 400 of a wheel, such that the stress in the spring portion 210 retains the clip 200 upon the wheel. To fit the clip it will generally either be hit with a hammer type tool or by use of an automatic machine which forces the clip over the rim.

It will be seen that an end region of the wheel rim 300 abuts the spring portion of the clip 210. Thus, the position of the clip on the wheel rim is determined once the clip is pushed onto the rim to this extent.

The rim-edge-region-engaging protrusion 215 on the spring portion is arranged such that it interacts with the underside of the rim 400 of the wheel. To remove the clip 200 from the rim 400 the rim-edge-region-engaging protrusion 215 is moved from the rim 400; i.e. clip is pulled in the direction of the arrow labelled '1' in the Figure. It will be seen that when the clip is pulled in this direction, the rim-edge-region-engaging protrusion 215 increases the stress in the spring portion 210 as the clip moves relative to the rim. As the rim-edge-region-engaging protrusion 215 moves toward the edge of the rim the protrusion 215 is forced to move in the direction of the arrow labelled '2' in the Figure which widens the gap labelled by the arrow '3'. This increased stress in the spring portion 210 increases the force required to remove the clip 200 when compared to a clip without a protrusion. Thus, the rim-edge-region-engaging protrusion 215 acts to aid retention of the clip 200 and prevent it from coming loose and falling off the wheel.

The rim-wall-engaging protrusions 260, 265 on the attachment portion are arranged such that they interact with the rim 400 of the wheel, and thus increase the stress in the spring portion 210 when compared to a clip without a protrusion. The rim-wall-engaging protrusions 260, 265 of the present embodiment are arranged, in use, to interact with the substantially vertical face of the rim of a wheel and help keep the spring portion 210 in a slightly open position such that it grips the rim 400 with more force than it would otherwise. Thus, the rim-wall-engaging protrusion 260 also acts to aid retention of the clip 200 but via a different mechanism when compared with the rim-edge-region-engaging protrusion 215.

It will be readily appreciated that the protrusions 215, 260, 265 of different clips 200 may differ in size and shape.

The clip 200 of the present invention may be provided with a protective, or sacrificial coating such as a dip or powder coating, paint, galvanisation, zinc plating or electroplating or the like in order to prevent corrosion (or a combination of these coatings). In the present embodiment the clip 200 is electroplated or zinc plated, and may be sprayed or dipped or powder coated, or a combination of such coatings. For example a clip may be protected by a first layer of zinc plating and a second layer of powder coating. The top coating may be coloured to enable a colour match, perhaps for cosmetic reasons.

The clip 200 may be manufactured from a single material such as: plastic, steel, lead, zinc, etc. or each portion of the clip 200 may be manufactured from a different material. While the present embodiment the clip is manufactured from spring steel, in an alternative embodiment the spring portion 210 may be provided by one material, while the attachment portion 220 and or the protrusions may be provided by another material.

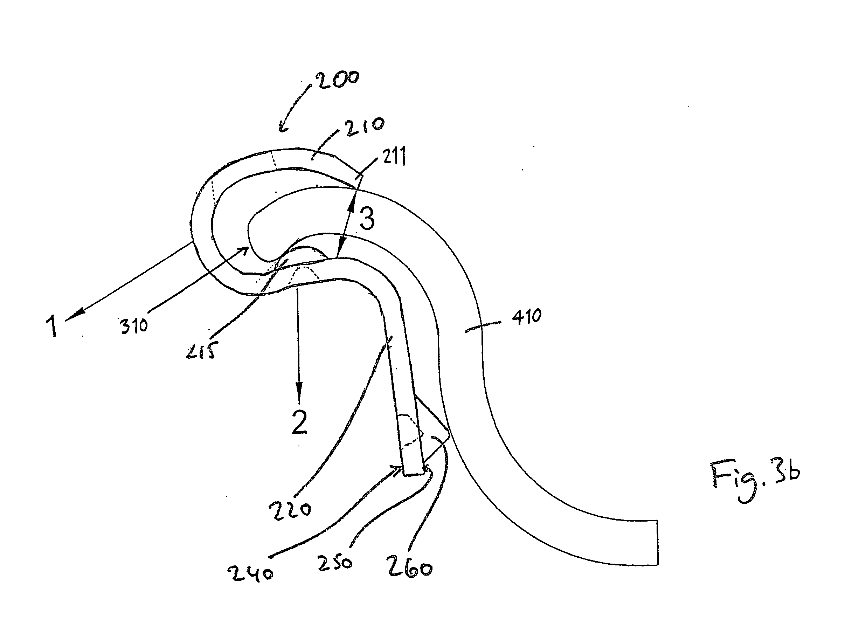

Figure 3b shows another example of how the wheel balance clip 200 of the first embodiment may be used. The Figure shows a steel wheel rim 410 with a different geometry in an end region 310 of the wheel rim 410 compared to the wheel rim 400 of Figure 3a. It will be seen that the spring portion of the clip 200 adjacent to the rim-edge-region-engaging protrusion 215 does not abut the end region 310 of the wheel rim 410 but the clip 200 abuts the wheel rim 410 at the following points: firstly where the rim-edge-region-engaging protrusion 215 on the spring portion is arranged such that it interacts with the underside of the rim 410 of the wheel, secondly where an end region 211 of the spring portion 210 of the clip 200 interacts with the upper surface of the wheel rim 410, and thirdly where the rim-wall-engaging protrusions 260, 265 on the attachment portion 220 are arranged such that they interact with the rim 410 of the wheel. The same analysis applies, mutatis mutandis, as for Figure 3a.

It will be seen that during removal of the clip 200 from the rim 410 the rim-edge-region-engaging protrusion 215 is pulled in the direction of the arrow labelled '1' in the Figure. When the clip is pulled in this direction, the rim-edge-region-engaging protrusion 215 increases the stress in the spring portion 210 as the clip 200 moves relative to the rim 410. As the rim-edge-region-engaging protrusion 215 moves toward the edge of the rim 410 the protrusion 215 is forced to move in the direction of the arrow labelled '2' in the Figure which widens the gap labelled by the arrow '3'. This increased stress in the spring portion 210 increases the force required to remove the clip 200 when compared to a clip without a protrusion. Thus, the rim-edge-region-engaging protrusion 215 acts to aid retention of the clip 200 and prevent it from coming loose and falling off the wheel.

Thus the protrusion 215 aids retention of the clip 200 on the rim 410 without the need for a groove, indentation or recess in the rim 410, and without damaging the rim 410. To this end the arcuate surface of the rim-edge-region-engaging protrusion 215 facilitates contact with a wheel rim at a range of angles without substantially gouging that wheel rim; the clip 200 is not arranged to dig into that wheel rim. The skilled person will appreciate that barbs would in any case tend to work with cast and therefore typically alloy wheel rims due to the softer nature of the metal; rolled and therefore typically steel wheel rims being harder would tend to resist the effect of a barb.

Such an arrangement may be yet further advantageous, as the provision of the at least one rim-edge-region-engaging protrusion that engages an underside edge region of the wheel rim may allow for a better compromise between the strength of retention of the clip on a wheel rim and the range of designs of wheel rim to which the clip may be fitted. The skilled person will appreciate that a wider gap across the entrance to the spring portion, as labelled by arrow '3' in Figures 3a and 3b, will allow the clip to be universally and successfully fitted, for example by a fitting method of hammering the clip onto the rim, to a wider range of designs of wheel rim. Conversely in the case of a clip having a narrower gap it is more likely that the clip will deform permanently when fitted, for example by a fitting method of hammering the clip onto the rim, The skilled person will further appreciate that as a consequence of a wider gap it is less likely that sufficient tension will be present in the spring portion of the clips of the prior art to enable secure retention of the clip on the wheel rim. By providing at least one rim-edge-region-engaging protrusion embodiments of the invention may allow sufficient retentive tension to be present in the spring portion of the clip when attached to a wider range of designs of wheel rim, and so provide a more universal and cost effective solution.

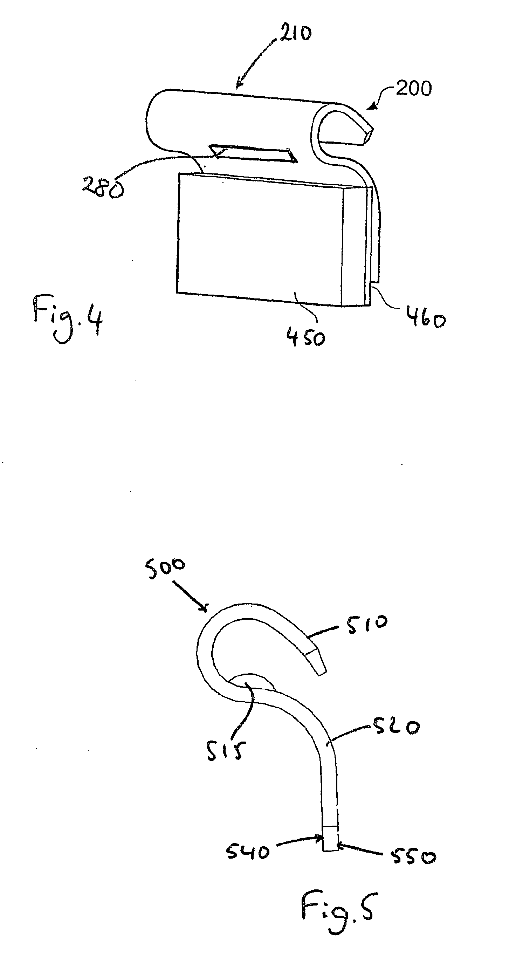

Figure 4 shows a further view of the clip 200 of Figure 2 but with a mass 450 mounted thereon. In this embodiment, the mass has been welded to the clip 200 using a plurality of resistance projection welds.

The complementary recess region 280 caused by formation of the rim-edge-region-engaging protrusion 215 can be seen on the rear face of the spring portion 210

Figure 5 shows a side elevation of a wheel balance clip 500. Parts of this embodiment which are similar to the parts discussed in relation to Figures 1 and 2 are referenced with the same reference numeral but starting with a 5; i.e. in the series of 500.

In this embodiment, it will be seen that whilst there is provided a rim-edge-region-engaging protrusion 515, the attachment portion 520 is substantially planar on both the first 550 and second 540 faces since no rim-wall-engaging protrusions are provided.

## Claims

1. A wheel balance clip (100) comprising:
a spring portion (110) arranged to accommodate and attach to a rim (400) of a wheel having an edge region divergent from a parallel to an axis of that wheel in a direction towards the axis; and
an attachment portion (120) depending from the spring portion (110),
wherein the spring portion (110) comprises at least one rim-edge-region-engaging protrusion(215), arranged such that, when in use, the at least one rim-edge-region-engaging protrusion (215) engages an underside edge region of a rim such that removal of the clip from that rim causes the spring portion to open and **characterised in that**:
the attachment portion (120) comprises a first face provided (250) with at least one second protrusion (260,265) which provides a rim-wall-engaging protrusion, which interacts with a rim of a wheel, generally with a face thereof, on which it is fitted.

2. A wheel balance clip according to claim 1 wherein the wheel rim (400) is a steel wheel rim.

3. A wheel balance clip according to claim 1 or claim 2 wherein the protrusion is arranged, in use, to operate on a substantially flat surface of a wheel rim (400).

4. A wheel balance clip according to any preceding claim in which the clip (100) is arranged to be fitted to a wheel rim (400) such that the spring portion (210) abuts against the wheel rim (400).

5. A wheel balance clip according to any preceding claim in which the attachment portion (120) in which the first face (250) includes a planar surface which is arranged to have a weight attached thereto.

6. A wheel balance clip according to any preceding claim, wherein the or each rim-edge-region-engaging protrusion (215) is formed from a deformed region of the spring portion (110), or wherein the or each rim-edge-region-engaging protrusion (215) is formed from an appendage, attached to the spring portion (110).

7. A wheel balance clip according to any preceding claim, wherein the or each rim-edge-region-engaging protrusion (110) has a substantially arcuate surface.

8. A wheel balance clip according to any preceding claim, wherein the rim-wall-engaging protrusion (260,265) is formed from a deformed region of the attachment portion (120), or wherein the rim-wall-engaging protrusion (260,265) is formed from an appendage, attached to the attachment portion (120).

9. A wheel balance clip according to any preceding claim, wherein the, or each rim-wall-engaging protrusion (260,265) is provided with an upper region (270), the upper region being substantially cambered.

10. A wheel balance assembly comprising a balance weight (450) and a clip according to any of the claims 1 to 9.

11. A method of maintaining a wheel balance clip (100) upon a rim (400) of a wheel, comprising the steps of:
providing a clip (100) as defined in any of claims 1 to 9;
attaching the clip (100) to a rim (400) such that the rim-edge-region-engaging protrusion (215) interacts with the underside of the rim upon which the clip is fitted and **characterised in that** the second, rim-wall-engaging portion (260, 265) interacts with a rim of a wheel on which it is fitted.

12. A wheel rim which is fabricated substantially from steel, on which there is affixed one or more wheel balance clips according to any of claims 1 to 9.

13. A wheel rim and clip according to claim 12 which has a thickness in the range of substantially 1mm to 3.5mm or more particularly the thickness of the wheel rim lies substantially in the range 1.5mm to 2.5mm.

14. A wheel rim and clip according to claim 13 or claim 14, in which the rim has a substantially smooth surface, without a predetermined groove and/or in which the edge region of the rim is curved.

## Patentansprüche

1. Ein Halter für ein Auswuchtgewicht (100) bestehend aus:
einer Feder (110), die angeordnet ist, dass sie eine Felge (400) eines Rads aufnimmt und an diesem befestigt wird, die einen Kantenbereich hat, der von einer Parallelen zu einer Achse dieses Rads in einer Richtung zur Achse abweicht; und
einer Befestigung (120), die von der Feder (110) abhängt,
wobei die Feder (110) zumindest einen in den Felgenrand einrastenden Ansatz (215) aufweist, der so angeordnet ist, dass im Gebrauch der zumindest eine in den Felgenrand einrastenden Ansatz (215) in eine Unterseite des Kantenbereichs einer Felge eingreift, so dass ein Entfernen des Halters von dieser Felge verursacht, dass sich die Feder öffnet, und **dadurch gekennzeichnet, dass**:
die Befestigung (120) eine erste Fläche (250) hat, die mit zumindest einem zweiten Ansatz (260, 265) versehen ist, der einen in die Felgenwand eingreifenden Ansatz liefert, der mit der Felge eines Rads, allgemein einer Fläche dieser, an der er befestigt ist, interagiert.

2. Ein Halter für ein Auswuchtgewicht entsprechend Anspruch 1, wobei die Radfelge (400) eine Stahlradfelge ist.

3. Ein Halter für ein Auswuchtgewicht entsprechend Anspruch 1 oder Anspruch 2, wobei der Ansatz im Gebrauch so angeordnet ist, dass er auf einer im Wesentlichen flachen Fläche einer Radfelge (400) eingesetzt wird.

4. Ein Halter für ein Auswuchtgewicht entsprechend einem der vorhergehenden Ansprüche, wobei der Halter (100) so angeordnet ist, dass an so an einer Radfelge (400) befestigt wird, dann die Feder (210) gegen die Radfelge (400) angrenzt.

5. Ein Halter für ein Auswuchtgewicht entsprechend einem der vorhergehenden Ansprüche, wobei die Befestigung (120), bei zur ersten Fläche (250) eine ebene Oberfläche gehört, die so angeordnet ist, dass ein Gewicht daran angebracht wird.

6. Ein Halter für ein Auswuchtgewicht entsprechend einem der vorhergehenden Ansprüche, wobei der oder jeder in den Felgenrand einrastende Ansatz (215) von einem deformierten Bereich der Feder (110) gebildet wird, oder wobei der oder jeder in den Felgenrand einrastende Ansatz (215) von einem an der Feder (110) angebrachten Fortsatz gebildet wird.

7. Ein Halter für ein Auswuchtgewicht entsprechend einem der vorhergehenden Ansprüche, wobei der oder jeder in den Felgenrand einrastende Ansatz(110) im Wesentlichen eine bogenförmige Fläche hat.

8. Ein Halter für ein Auswuchtgewicht entsprechend einem der vorhergehenden Ansprüche, wobei der in den Felgenwand eingreifende Ansatz (260, 265) von einem deformierten Bereich einer Befestigung (120) gebildet wird, oder wobei der in die Felgenwand eingreifende Ansatz (260, 265) von einem Fortsatz, der an der Befestigung (120) angebracht ist, gebildet wird.

9. Ein Halter für ein Auswuchtgewicht entsprechend einem der vorhergehenden Ansprüche, wobei der oder jeder in die Felgenwand eingreifende Ansatz (260, 265) einen obere Bereich (270) aufweist, wobei der obere Bereich im Wesentlichen gewölbt ist.

10. Eine Radauswuchteinheit bestehend aus einem Auswuchtgewicht (450) und einem Halter entsprechend einem der Ansprüche 1 bis 9.

11. Ein Verfahren zum Halten eines Halters für ein Auswuchtgewicht (100) an einer Felge (400) eines Rads bestehend aus folgenden Schritten:
Bereitstellen eines Halters (100) gemäß der Definition in einem der Ansprüche 1 bis 9;
Befestigen des Halters (100) an einer Felge (400), so dass der in den Felgenrand einrastende Ansatz (215) mit der Unterseite der Felge interagiert, an welcher der Halter angebracht ist, und **dadurch gekennzeichnet, dass** der zweite in die Felgenrand eingreifende Ansatz (260, 265) mit einer Felge eines Rads, an dem er angebracht ist, interagiert.

12. Eine Radfelge, die im Wesentlichen aus Stahl hergestellt ist, an der ein oder mehrere für Auswuchtgewichte entsprechend einem der Ansprüche 1 bis 9 angebracht ist/sind.

13. Eine Radfelge und ein Halter entsprechend Anspruch 12 mit einer Dicke im Wesentlich im Bereich von 1 mm bis 3,5 mm oder wobei genauer die dicke der Radfelge im Wesentlichen im Bereich von 1,5 mm bis 2,5 mm liegt.

14. Eine Radfelge und ein Halter entsprechend Anspruch 13 oder Anspruch 14, wobei die Felge einen im Wesentliche glatte Oberfläche ohne vorbestimmte Rille hat und/oder wobei der Kantenbereich der Felge gebogen ist.

## Revendications

1. Une bride d'équilibrage de roue (100) comprenant :
une partie ressort (110) agencée de façon à loger et se rattacher à une jante (400) d'une roue possédant une zone de bordure s'écartant de et parallèle à un axe de cette roue dans une direction vers l'axe, et
une partie fixation (120) dépendant de la partie ressort (110),
où la partie ressort (110) comprend au moins une saillie de mise en prise de zone de bordure de jante (215) agencée de sorte que, en utilisation, la au moins une saillie de mise en prise de zone de bordure de jante (215) entre en prise avec une zone de bordure inférieure d'une jante de sorte que le retrait de la bride de cette jante amène la partie ressort à s'ouvrir et est **caractérisée en ce que** :
la partie fixation (120) comprend une première face équipée (250) d'au moins une deuxième saillie (260, 265) qui fournit une saillie de mise en prise de paroi de jante qui interagit avec une jante d'une roue, généralement avec une face de celle-ci, sur laquelle elle est installée.

2. Une bride d'équilibrage de roue selon la Revendication 1 où la jante de roue (400) est une jante de roue en acier.

3. Une bride d'équilibrage de roue selon la Revendication 1 ou 2 où la saillie est agencée, en utilisation, de façon à fonctionner sur une surface sensiblement plane d'une jante de roue (400).

4. Une bride d'équilibrage de roue selon l'une quelconque des Revendications précédentes dans laquelle la bride (100) est agencée de façon à être installée sur une jante de roue (400) de sorte que la partie ressort (210) vienne buter contre la jante de roue (400).

5. Une bride d'équilibrage de roue selon l'une quelconque des Revendications précédentes dans laquelle la partie fixation (120) dans laquelle la première face (250) comprend une surface plane qui est agencée de façon à avoir un poids rattaché à celle-ci.

6. Une bride d'équilibrage de roue selon l'une quelconque des Revendications précédentes, où la ou chaque·saillie de mise en prise de zone de bordure de jante (215) est formée à partir d'une partie déformée de la partie ressort (110), ou où la ou chaque saillie de mise en prise de zone de bordure de jante (215) est formée à partir d'un appendice fixé à la partie ressort (110).

7. Une bride d'équilibrage de roue selon l'une quelconque des Revendications précédentes, où la ou chaque saillie de mise en prise de zone de bordure de jante (110) possède une surface sensiblement courbée.

8. Une bride d'équilibrage de roue selon l'une quelconque des Revendications précédentes, où la saillie de mise en prise de paroi de jante (260, 265) est formée à partir d'une partie déformée de la partie fixation (120), ou où la saillie de mise en prise de paroi de jante (260, 265) est formée à partir d'un appendice fixé à la partie fixation (120).

9. Une bride d'équilibrage de roue selon l'une quelconque des Revendications précédentes, où la ou chaque saillie de mise en prise de paroi de jante (260, 265) est équipée d'une zone supérieure (270), la zone supérieure étant sensiblement arquée.

10. Un ensemble d'équilibrage de roue comprenant un poids d'équilibrage (450) et une bride selon l'une quelconque des Revendications 1 à 9.

11. Un procédé de maintien d'une bride d'équilibrage de roue (100) sur une jante (400) d'une roue, comprenant les opérations suivantes :
la fourniture d'une bride (100) selon l'une quelconque des Revendications 1 à 9,
la fixation de la bride (100) à une jante (400) de sorte que la saillie de mise en prise de zone de bordure de jante (215) interagisse avec la partie inférieure de la jante sur laquelle la bride ext fixée et est **caractérisée en ce que** la deuxième partie de mise en prise de paroi de jante (260, 265) interagisse avec une jante d'une roue sur laquelle elle est fixée.

12. Une jante de roue qui est fabriquée sensiblement en acier, sur laquelle sont fixées une ou plusieurs brides d'équilibrage de roue selon l'une quelconque des Revendications 1 à 9.

13. Une jante de roue et une bride selon la Revendication 12 qui possède une épaisseur dans la plage de sensiblement 1 mm à 3,5 mm ou plus, plus particulièrement l'épaisseur de la jante de roue se situe sensiblement dans la plage de 1,5 mm à 2,5 mm.

14. Une jante de roue et une bride selon la Revendication 13 ou 14, dans laquelle la jante possède une surface sensiblement lisse, sans une rainure prédéterminée et/ou dans laquelle la zone de bordure de la jante est incurvée.
